# FASCICULE DE BREVET EUROPEEN

(11) **EP 1 916 159 B1**
(45) Date de publication et mention de la délivrance du brevet: **09.12.2009**
(21) Numéro de dépôt: 07301493.8
(22) Date de dépôt: 25.10.2007
(51) Int. Cl.: B60R 21/02

(54) **Dispositif de fixation pour grille de protection**
Vorrichtung zur Befestigung eines Schutzgitters
Attachment device for protective grid

(30) Priorité: 26.10.2006 FR 0654561
(43) Date de publication de la demande: 30.04.2008
(73) Titulaire: Renault s.a.s., 92100 Boulogne-Billancourt (FR)
(72) Inventeur: Ramel, Jean-Baptiste, 78180, Montigny Le Bretonneux (FR); Turquier, Renaldo M., 78440, Fontenay St Pere (FR)

(56) Documents cités:
- EP-A- 0 825 071
- FR-A1- 2 859 431
- GB-A- 2 298 829
- GB-A- 2 335 630
- US-A- 4 621 856

## Description

La présente invention se rapporte à un dispositif de fixation de cloison de séparation d'habitacle sur une portion de carrosserie de véhicule automobile comprenant une patte de fixation fixée d'une part à la cloison de séparation par des premiers moyens d'accrochage et d'autre part à un élément d'habitacle rapporté sur la portion de carrosserie par des deuxièmes moyens d'accrochage.

US 4 621 856 A décrit un dispositif de fixation conformement au préambule de la revendication 1.

Les véhicules automobiles sont souvent déclinés en une version destinée aux particuliers et en une version société destinée aux entreprises dont la particularité est d'offrir un espace de rangement de plus grand volume par la suppression de la rangée de sièges passagers présente dans la version particuliers. Dans la version société, une cloison de séparation est disposée entre le coffre et les sièges avant, pour éviter que le chargement de l'espace de chargement ne passe à l'avant lors de décélérations brutales, notamment lors d'un choc.

D'une part, cette cloison de séparation doit être solidement fixée à l'habitacle du véhicule car le poids du chargement à retenir est potentiellement élevé. D'autre part, cette transformation du véhicule doit pouvoir être effectuée sans opération mécanique lourde telle que des opérations de soudage afin de permettre notamment, en cas de rachat d'un véhicule par une concession, la conversion d'une version vers l'autre.

Une solution proposée dans l'art antérieur consiste à fixer cette cloison, par des écrous cage, sur un élément rapporté d'habitacle, au niveau des orifices de poignées de virage, non utilisés dans la version société. Cependant cette solution n'apparaît pas adaptée en cas de chocs puissants et/ou de chargement de poids important. En effet, les portées des écrous cage sur la tôle n'apparaissent pas suffisamment robustes, ce qui conduit à leur rupture. Cette solution présente également des difficultés au moment du montage des écrous cage, cette opération devant être réalisée depuis l'extérieur du véhicule, en aveugle, au toucher seulement, et effectuée autant de fois qu'il y a d'écrous.

L'invention vise à améliorer les systèmes de l'art antérieur et se propose de remédier à leurs inconvénients précédemment cités. Plus particulièrement, l'invention vise à améliorer la répartition des efforts de la patte de fixation suivant une direction longitudinale du véhicule, c'est à dire sa direction de marche. L'invention a aussi pour but de simplifier les opérations de montage.

Dans ce but, on propose d'ajouter au dispositif de fixation de cloison de séparation d'habitacle un renfort disposé au moins en partie entre la portion de carrosserie et l'élément d'habitacle rapporté dont une première partie s'étend selon la direction longitudinale du véhicule et une deuxième partie porte au moins deux parties femelles des deuxièmes moyens d'accrochage.

Selon d'autres caractéristiques avantageuses de l'invention qui peuvent être prises séparément ou en combinaison :
- au moins deux parties mâles des deuxièmes moyens d'accrochage sont engagées dans les passages formés dans l'élément d'habitacle rapporté et coopèrent avec les parties femelles des deuxièmes moyens d'accrochage ;
- la première partie du renfort forme butée et est apte à faciliter le positionnement des parties femelles vis-à-vis de passages formés dans l'élément d'habitacle rapporté ;
- l'un parmi l'élément rapporté d'habitacle, la portion de carrosserie ou une doublure recouvrant la portion de carrosserie présente un soyage apte à compenser l'épaisseur de la deuxième partie du renfort au niveau des parties femelles des deuxièmes moyens d'accrochage, ceci permettant une meilleure intégration du dispositif dans l'habitacle ;
- la portion de carrosserie est la custode du véhicule;
- l'élément d'habitacle rapporté est un déflecteur d'airbag latéral;
- qu'un renfort comporte une première partie formant butée s'étendant selon la direction longitudinale du véhicule et une deuxième partie s'étendant suivant une direction sensiblement verticale du véhicule portant les moyens femelle des deuxièmes moyens d'accrochage;
- la première partie formant butée s'étend aussi suivant une direction sensiblement horizontale du véhicule.

D'autres caractéristiques et avantages de l'invention apparaîtront clairement à la lecture de la description détaillée d'un mode de réalisation pris à titre d'exemple nullement limitatif, et illustré par les dessins annexés, sur lesquels :
- la figure 1 est une vue d'ensemble en éclaté du dispositif lié à la cloison selon l'invention;
- la figure 2 est un éclaté du dispositif selon l'invention;
- la figure 3 est une vue en perspective du renfort de fixation du dispositif selon l'invention.

Dans la description qui va suivre, on se référera au repère usuel dans lequel, la direction X correspond à la direction longitudinale du véhicule, c'est à dire sa direction de marche, la direction Y correspond à une direction horizontale transversale perpendiculaire à la direction X, et la direction Z perpendiculaire aux deux précédentes correspond à la direction verticale.

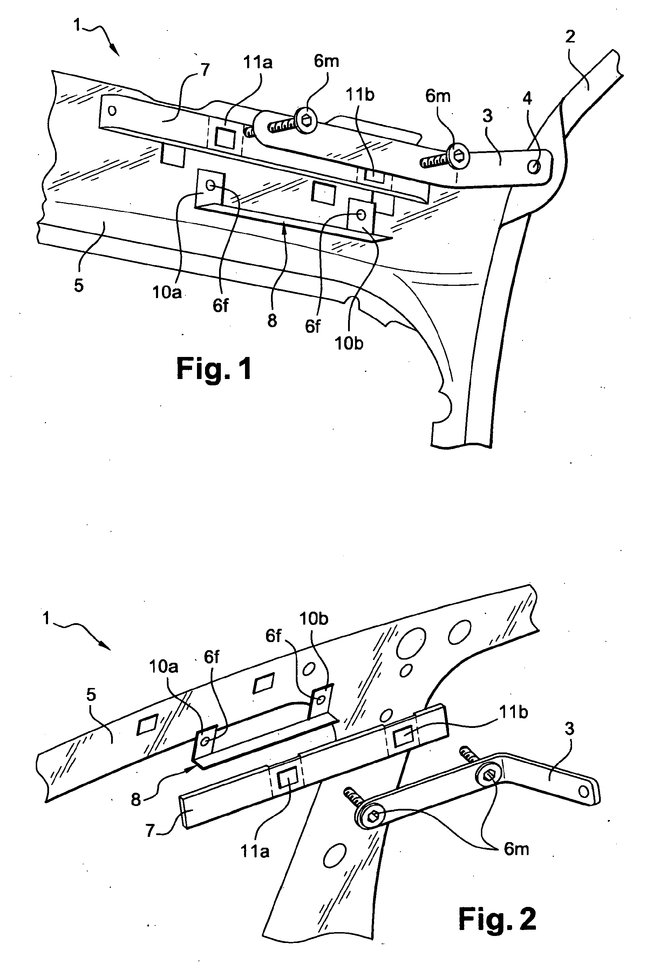

Sur la figure 1 est représenté, en éclaté et en vue de dessous, le dispositif de fixation 1 de la cloison de séparation 2 selon un premier mode de réalisation. Une patte de fixation 3 est fixée d'une part à la cloison de séparation 2 par des premiers moyens d'accrochage 4 et d'autre part à une portion de carrosserie 5 par des deuxièmes moyens d'accrochage 6. Ces deuxièmes moyens d'accrochage 6 s'étendent entre la patte de fixation 3 et la portion de carrosserie 5 au travers de passages 11a et 11b ménagés dans un élément d'habitacle rapporté 7 disposé entre la patte de fixation 3 et la portion de carrosserie 5.

Un renfort d'accrochage 8 est intercalé entre l'élément d'habitacle rapporté 7 et la portion de carrosserie 5. Ce renfort présente une première partie formant butée 9 s'étendant selon les directions longitudinale et horizontale du véhicule et une deuxième partie s'étendant suivant une direction verticale, cette deuxième partie 10 présentant des orifices constituant les parties femelles 6f des deuxièmes moyens d'accrochage 6 dans lesquelles s'engagent des parties mâles 6m des deuxièmes moyens d'accrochage 6.

Comme représentée sur cette figure, cette deuxième partie 10 peut présenter deux pattes 10a, 10b sur lesquelles sont formées les parties femelles 6f. La distance séparant ces parties femelles 6f correspond à l'entraxe des passages 1 1 a et 11 b formés dans l'élément d'habitacle rapporté 7 pouvant servir à la fixation des poignées de virage. Ces poignées présentes sur le véhicule en version particulier sont absentes de la version société, laissant leurs orifices de fixation libres. Pour plusieurs modèles de véhicules, cet élément d'habitacle rapporté 7 sert de déflecteur d'airbag en raison de sa robustesse et de sa capacité à résister, dans la version destinée aux particuliers, au poids d'un passager se tenant à ces poignées.

Comme représenté sur les figures 1 et 2, l'élément d'habitacle rapporté 7 présente des logements au voisinage des passages 11a, 11b s'étendant selon une direction verticale avec au moins une ouverture vers le bas afin de permettre l'introduction des pattes 10a, 10b entre cet élément d'habitacle rapporté 7 et la portion de carrosserie 5. Les dimensions géométriques de ces logements permettent de compenser l'épaisseur de ces pattes 10a, 10b et ainsi de permettre une zone d'appui satisfaisante entre l'élément d'habitacle rapporté 7 et la portion de carrosserie 5.

Sur la figure 2, est représenté, en éclaté, le dispositif de fixation 1 de la cloison de séparation 2 en vue de dessus selon le premier mode de réalisation.

Ces passages d'accrochage des poignées de virage 11a, 11 b présentent l'avantage d'être communs à toutes les carrosseries des véhicules quelque soit leur version et présentent un entre axe standard entre les orifices. De plus, ces passages sont particulièrement robustes puisqu'ils permettent, en coopération avec les poignées, de retenir une partie non négligeable du poids d'un passager s'y accrochant.

On observe aussi que le renfort 8 s étend sensiblement longitudinalement sur sa première partie 9 suivant l'axe X et présente deux orifices formant les parties femelles 6f des deuxièmes moyens d'accrochage 6 sur sa deuxième partie 10. Le dispositif 1 offre alors en cas de choc, une répartition de l'effort selon la direction longitudinale du véhicule, diminuant ainsi les efforts exercés au voisinage des parties femelles 6f.

La contrainte locale étant moins forte autour des points d'accroche, on prévient les risques de rupture du dispositif de fixation 1.

On apporte aussi, grâce à la disposition des parties femelles 6f des deuxièmes moyens d'accrochage 6 sur un support unique constitué par le renfort 8, une simplification des opérations de montage. En effet, quelque soit le nombre de parties femelles 6f utilisées, l'opérateur n'a qu'une seule opération de positionnement à réaliser. Cette opération unique est également facilitée par le fait que les éléments à manipuler sont de tailles importantes, notamment plus grands que les écrous cage.

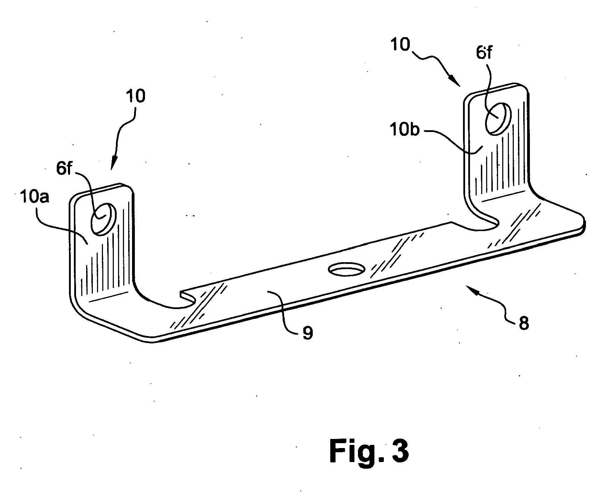

Sur la figure 3 est représenté en perspective le renfort d'accrochage 8 du dispositif 1 selon un premier mode de réalisation de l'invention. Le renfort 8 tel que représenté dans ce premier mode de réalisation présente sur la première partie une partie recourbée 9 s'étendant selon la direction Y, et qui permet de prendre appui sur une partie inférieure de l'élément d'habitacle rapporté 7. De cette manière, les opérations de montage sont facilitées, une fois l'élément d'habitacle rapporté 7 solidarisé au véhicule, il suffit de mettre cette partie recourbée en appui sur le bord inférieur de l'élément d'habitacle rapporté 7 selon un mouvement sensiblement vertical ascendant pour que les parties femelles 6f des deuxièmes moyens d'accrochage 6 formés sur la deuxième partie 10 du renfort 8 s'alignent en hauteur avec les passages 1 1 a, 1 1 b de l'élément d'habitacle rapporté 7.

De cette manière, on simplifie davantage encore les opérations de montage par rapport au dispositif utilisant des écrous cages par exemple, qui doivent être montés en aveugles, montage qui doit être répété autant de fois que d'écrous et sur lesquelles il est difficile de faire des butées de positionnement.

Le renfort 8 peut aussi présenter une première partie 9 recourbée ou tout autre forme de butée pour permettre l'alignement des parties femelles 6f des deuxièmes moyens d'accrochage 6 selon la direction longitudinale du véhicule, X.

Ce renfort d'accrochage 8 peut présenter, au niveau de sa deuxième partie, une surépaisseur, pour permettre la réalisation d'un filetage formant les parties femelles 6f des deuxièmes moyens d'accrochage 6 apte à assurer une bonne tenue des parties mâles 6m des deuxièmes moyens d'accrochage 6. Cette surépaisseur du renfort 8 doit être compensée soit au niveau de la portion de carrosserie 5, soit sur l'élément rapporté d'habitacle 7 ou sur la doublure de la portion de carrosserie, non représentée. Pour cela, deux soyages sont, par exemple, réalisés sur la doublure de la portion de carrosserie.

Selon un deuxième mode de représentation non représenté, le renfort de fixation présente une forme s'étendant selon la direction X dans un plan unique. La première partie du renfort s'étend alors selon des directions longitudinales X et verticales, Z, et la deuxième partie s'étend selon une direction verticale, Z. La première partie de ce renfort est dans le prolongement de cette première partie de renfort et est fixée à la portion de carrosserie ou à sa doublure. La deuxième partie présente au moins deux surfaces d'appui dans lesquelles sont formées les parties femelles des deuxièmes moyens d'accrochage avec un entre axe correspondant à l'entre axe des passages de poignée de virage. Comme dans le premier mode de réalisation, il est avantageux de compenser l'épaisseur de la deuxième partie du renfort. On peut aussi par exemple réaliser au moins un soyage dans la doublure de la portion de carrosserie.

Selon ce deuxième mode de réalisation au même titre que pour le premier, on peut prévoir une butée apte à limiter le glissement vertical du renfort le long de l'élément d'habitacle rapporté, ceci afin de permettre un positionnement facilité des éléments constitutifs du dispositif, objet de l'invention. On peut également prévoir une butée apte à limiter le glissement longitudinal du renfort le long de l'élément d'habitacle rapporté.

Selon ce deuxième mode de réalisation, on obtient bien un dispositif permettant d'une part de simplifier le montage de par la présence des deux parties femelles des deuxième moyens d'accrochage ainsi que d'une butée de positionnement, et d'autre part de répartir les efforts suivant une direction longitudinale du véhicule, en raison de la forme du renfort s'étendant suivant l'axe X.

Plus généralement, un renfort d'accrochage présentant au moins deux parties femelles des deuxièmes moyens d'accrochage d'entre axe égal à l'entre axe des passages qui sont ménagés dans l'élément rapporté d'habitacle et s'étendant selon la direction X de façon à répartir les efforts lors d'une décélération brutale du véhicule convient dans la mise en oeuvre de l'invention.

## Revendications

1. Dispositif de fixation (1) de cloison de séparation d'habitacle (2) sur une portion de carrosserie (5) comprenant une patte de fixation (3) fixée d'une part à la cloison de séparation (2) par des premiers moyens d'accrochage (4) et d'autre part à un élément d'habitacle rapporté (7) sur la portion de carrosserie (5) par des deuxièmes moyens d'accrochage (6) **caractérisé en ce qu'**un renfort (8) est disposé au moins en partie entre la portion de carrosserie (5) et l'élément d'habitacle rapporté (7) et **en ce que** ce renfort (8) présente une première partie (9) s'étendant selon la direction longitudinale du véhicule et une deuxième partie (10) pourtant au moins deux parties femelles (6f) des deuxièmes moyens d'accrochage (6)

2. Dispositif de fixation (1) selon la revendication 1 **caractérisé en ce qu'**au moins deux parties mâles (6m) des deuxièmes moyens d'accrochage (6) sont engagées dans les passages (11a, 11b) formés dans l'élément d'habitacle rapporté (7) et coopèrent avec les parties femelles (6f) des deuxièmes moyens d'accrochage (6).

3. Dispositif de fixation (1) selon l'une des revendications 1 ou 2 **caractérisé en ce que** la première partie (9) du renfort (8) forme butée et est apte à faciliter le positionnement des parties femelles (6f) vis-à-vis de passages (11a, 11b) formés dans l'élément d'habitacle rapporté (7).

4. Dispositif de fixation (1) selon l'une quelconque des revendications précédentes **caractérisé en ce que** l'un parmi l'élément rapporté d'habitacle (7), la portion de carrosserie (5) ou une doublure recouvrant la portion de carrosserie (5) présente un soyage apte à compenser l'épaisseur due la deuxième partie (10) du renfort (8) au niveau des parties femelles (6f) des deuxièmes moyens d'accrochage.

5. Dispositif de fixation (1) selon l'une quelconque des revendications précédentes **caractérisé en ce que** la portion de carrosserie (5) est la custode du véhicule.

6. Dispositif de fixation (1) selon l'une quelconque des revendications précédentes **caractérisé en ce que** l'élément d'habitacle rapporté (7) est un déflecteur d'airbag latéral.

7. Dispositif de fixation (1) selon la revendication 1 **caractérisé en ce qu'**un renfort (8) comporte une première partie formant butée (9) s'étendant selon la direction longitudinale du véhicule et une deuxième partie (10) s'étendant suivant une direction sensiblement verticale du véhicule portant les moyens femelle (6f) des deuxièmes moyens d'accrochage (6).

8. Dispositif de fixation (1) selon la revendication 7 **caractérisé en ce que** la première partie formant butée (9) s'étend aussi suivant une direction sensiblement horizontale du véhicule.

## Claims

1. Attachment device (1) for attaching a cabin dividing partition (2) to a bodywork portion (5) and comprising an attachment bracket (3) attached, on the one hand, to the dividing partition (2) by first fastening means (4) and, on the other hand, an add-on cabin element (7) secured to the bodywork portion (5) by second fastening means (6), **characterized in that** a reinforcement (8) is positioned at least in part between the bodywork portion (5) and the add-on cabin element (7), and **in that** the reinforcement (8) has a first part (9) running in the longitudinal direction of the vehicle and a second part (10) bearing at least two female parts (6f) of the second fastening means (6).

2. Attachment device (1) according to Claim 1, **characterized in that** at least two male parts (6m) of the second fastening means (6) are engaged in the passages (11a, 11b) formed in the add-on cabin element (7) and collaborate with the female parts (6f) of the second fastening means (6).

3. Attachment device (1) according to one of Claims 1 and 2, **characterized in that** the first part (9) of the reinforcement (8) forms an end stop and can facilitate the positioning of the female parts (6f) facing passages (11a, 11b) formed in the add-on cabin element (7).

4. Attachment device (1) according to any one of the preceding claims, **characterized in that** of the add-on cabin element (7), the bodywork portion (5) and a lining covering the bodywork portion (5), one is plunged in order to compensate for the thickness of the second part (10) of the reinforcement (8) in the region of the female parts (6f) of the second fastening means.

5. Attachment device (1) according to any one of the preceding claims, **characterized in that** the bodywork portion (5) is the vehicle rear quarter panel.

6. Attachment device (1) according to any one of the preceding claims, **characterized in that** the add-on cabin element (7) is a side airbag deflector.

7. Attachment device (1) according to Claim 1, **characterized in that** a reinforcement (8) comprises a first part forming an end stop (9) running in the longitudinal direction of the vehicle and a second part (10) running in a substantially vertical direction of the vehicle bearing the female means (6f) of the second fastening means (6).

8. Attachment device (1) according to Claim 7, **characterized in that** the first part that forms an end stop (9) also runs in a substantially horizontal direction of the vehicle.

## Patentansprüche

1. Vorrichtung (1) zur Befestigung einer Innenraumtrennwand (2) an einem Karosserieteil (5) mit einer Befestigungslasche (3), die einerseits durch erste Anbringmittel (4) an der Trennwand (2) und andererseits durch zweite Anbringmittel (6) an einem an dem Karosserieteil (5) angefügten Innenraumelement (7) befestigt ist, **dadurch gekennzeichnet, dass** eine Verstärkung (8) zumindest teilweise zwischen dem Karosserieteil (5) und dem angefügten Innenraumelement (7) angeordnet ist und dass diese Verstärkung (8) einen ersten Teil (9) aufweist, der sich in Längsrichtung des Fahrzeugs erstreckt, und einen zweiten Teil (10), der mindestens zwei Aufnahmeteile (6f) der zweiten Anbringmittel (6) trägt.

2. Befestigungsvorrichtung (1) nach Anspruch 1, **dadurch gekennzeichnet, dass** mindestes zwei Steckteile (6m) der zweiten Anbringmittel (6) in den im angefügten Innenraumelement (7) ausgebildeten Durchgängen (11a, 11b) in Eingriff stehen und mit den Aufnahmeteilen (6f) der zweiten Anbringmittel (6) zusammenwirken.

3. Befestigungsvorrichtung (1) nach Anspruch 1 oder 2, **dadurch gekennzeichnet, dass** der erste Teil (9) der Verstärkung (8) einen Anschlag bildet und die Positionierung der Aufnahmeteile (6f) gegenüber den im angefügten Innenraumelement (7) ausgebildeten Durchgängen (11a, 11b) erleichtern kann.

4. Befestigungsvorrichtung (1) nach einem der vorhergehenden Ansprüche, **dadurch gekennzeichnet, dass** das angefügte Innenraumelement (7) oder der Karosserieteil (5) oder eine den Karosserieteil (5) bedeckende Auskleidung einen Durchzug aufweist, der die Dicke des zweiten Teils (10) der Verstärkung (8) an den Aufnahmeteilen (6f) der zweiten Anbringmittel ausgleichen kann.

5. Befestigungsvorrichtung (1) nach einem der vorhergehenden Ansprüche, **dadurch gekennzeichnet, dass** der Karosserieteil (5) die Fahrzeug-Heckpartie ist.

6. Befestigungsvorrichtung (1) nach einem der vorhergehenden Ansprüche, **dadurch gekennzeichnet, dass** das angefügte Innenraumelement (7) eine Seitenairbagumlenkvorrichtung ist.

7. Befestigungsvorrichtung (1) nach Anspruch 1, **dadurch gekennzeichnet, dass** eine Verstärkung (8) einen einen Anschlag bildenden ersten Teil (9), der sich in Längsrichtung des Fahrzeugs erstreckt, und einen zweiten Teil (10), der sich in einer im Wesentlichen vertikalen Richtung des Fahrzeugs erstreckt und die Aufnahmemittel (6f) für die zweiten Anbringmittel (6) trägt, aufweist.

8. Befestigungsvorrichtung (1) nach Anspruch 7, **dadurch gekennzeichnet, dass** sich der einen Anschlag bildende erste Teil (9) auch entlang einer im Wesentlichen horizontalen Richtung des Fahrzeugs erstreckt.
